# EUROPEAN PATENT APPLICATION

(11) **EP 4 269 637 A1**
(43) Date of publication of application: **01.11.2023**
(21) Application number: 21909918.1
(22) Date of filing: 20.10.2021
(51) Int. Cl.: C22C 21/00, B23K 35/14, B23K 35/28, B23K 35/363, B23K 35/40

(54) **FLUX-CORED RING**

(30) Priority: 23.12.2020 JP 2020213688
(71) Applicant: Daiichi Kigenso Kagaku Kogyo Co., Ltd., Osaka-shi, Osaka 541-0041 (JP)
(72) Inventor: NAGAE, Takahiro, Osaka-shi, Osaka 559-0025 (JP); KUNISADA, Taichi, Osaka-shi, Osaka 541-0041 (JP)
(74) Representative: Novagraaf International SA
(86) International application number: PCT/JP2021/038687
(87) International publication number: WO 2022/137761

(57) **Abstract**

Provided is a flux-cored ring (1) of a tubular brazing material (2) enclosing flux (3) that is formed into a ring by abutting both end portions in an extending direction of the tubular brazing material (2) against each other. The flux-cored ring includes: in one of the both end portions of the brazing material (2), a pair of protruded portions (31) protruding toward the other of the both end portions of the brazing material (2) and opposed to each other in a direction orthogonal to the extending direction of the brazing material (2); and in the other of the both end portions of the brazing material (2), a pair of recessed portions (32) fitting onto the protruded portions (31) and opposed to each other in the direction orthogonal to the extending direction of the brazing material (2).

## Description

### [Technical Field]

The present invention relates to a ring-shaped flux-cored ring enclosing flux.

### [Background Art]

In joining metal pieces each having an oxide film formed on the base material surface, such as aluminum pieces, by brazing, flux is supplied to the base material surface of the metal piece to remove the oxide film formed on the base material surface of the metal piece.

Various methods have been developed for supplying the flux to the metal piece in the brazing. For example, a method using a flux-cored wire of a wire-shaped brazing material enclosing flux is known (see PTL 1).

The flux-cored wire refers to an elongated tubular brazing material filled with flux. When the flux-cored wire is used to join two aluminum pipes by brazing, first, a flux-cored ring (a brazing ring) is prepared in advance which is shaped into a ring from a tubular brazing material cut out by cutting the flux-cored wire to a predetermined length so that the both end portions in the extending direction of the tubular brazing material abut against each other and the inner diameter of the ring is almost equal to the outer diameter of the pipe. Next, the flux-cored ring is put around a brazing portion of the pipe periphery, and the brazing portion is heated by a burner, a radio-frequency heater, or the like. In this manner, a brazing material formed into a ring and the flux enclosed with the brazing material are melted, and thus two pipes can be joined together by brazing.

### [Citation List]

### [Patent Literature]

[PTL 1] Japanese Unexamined Patent Application Publication No. 2011-104632

### [Summary of Invention]

### [Technical Problem]

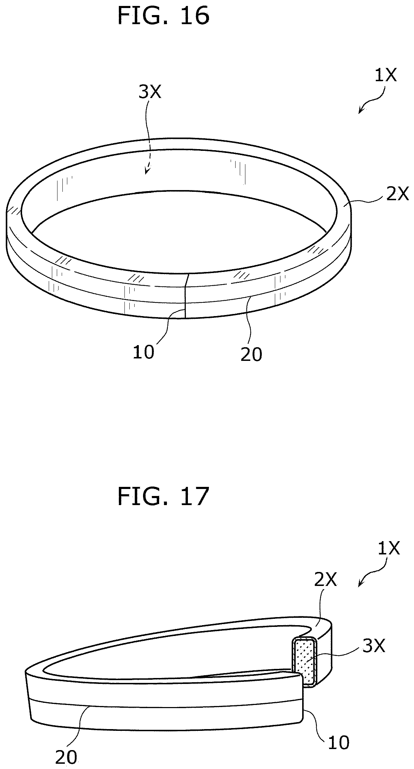

FIG. 16 illustrates one example of conventional flux-cored ring 1X. As shown in FIG. 16, conventional flux-cored ring 1X is configured to form a ring by abutting both end portions in the extending direction of tubular brazing material 2X enclosing flux 3X against each other. Accordingly, flux-cored ring 1X has ring abutment 10 in which one of the both end portions of tubular brazing material 2X and the other of the both end portions abut against each other. Note that flux-cored ring 1X also has plate abutment 20 at which end portions in the width direction of a brazing material plate having a predetermined width abut against each other by bending the brazing material plate.

In conventional flux-cored ring 1X, the abutment plane between the both end portions at ring abutment 10 is flat, and at ring abutment 10, the end faces of the both end portions of brazing material 2X are just in contact with each other. In other words, in ring abutment 10, one of the both end portions of brazing material 2X and the other of the both end portions are not joined together.

For this reason, when an external force is applied to flux-cored ring 1X due to pressure generated in stacking flux-cored rings 1X for storage or shock generated in packing, transport, or handling by a purchaser, sliding may occur on the abutment plane of ring abutment 10 of brazing material 2X, as shown in FIG. 17. In other words, the end face of one of the both end portions of brazing material 2X and the end face of the other of the both end portions may move in opposite directions along the ring thickness direction.

In particular, for tubular brazing material 2X made of an aluminum alloy, even when sliding occurs on the abutment plane of ring abutment 10 due to application of an external force to flux-cored ring 1X, tubular brazing material 2X does not return to the original shape since the aluminum alloy has a small spring back in its mechanical properties. Accordingly, sliding remains in the abutment plane.

When sliding remains in the abutment plane of ring abutment 10 of brazing material 2X as described above, failure occurs in equipment that handles flux-cored ring 1X. For example, in an automated insertion machine for automatically providing flux-cored rings 1X to pipes, the width of a feeder or the like is determined based on the ring thickness of flux-cored ring 1X. For this reason, when flux-cored ring 1X with sliding is mixed into flux-cored rings 1X to be provided to the automated insertion machine, flux-cored rings 1X may get stuck in the automated insertion machine. When such a failure occurs, the automated insertion machine stops. Accordingly, man hours are wasted until the failure is eliminated and the automated insertion machine restarts.

In view of this, it is considered that the both end portions are joined by welding at ring abutment 10 to prevent sliding from occurring on the abutment plane of ring abutment 10. Unfortunately, the intended use of flux-cored ring 1X is to perform brazing by melting brazing material 2X and flux 3X enclosed with brazing material 2X. Accordingly, when ring abutment 10 is welded, leakage of the flux, or growth or thermal denaturation of the oxide film on the surface of the brazing material occurs in the welding, and thus the essential purpose of use of the flux-cored ring cannot be achieved. Moreover, when ring abutment 10 is welded, a welding step is necessary, thereby increasing cost.

The present invention is conceived in view of the above problem. The object of the present invention is to provide a flux-cored ring that not need to weld a ring abutment of a tubular brazing material formed into a ring and can prevent sliding at the ring abutment of the flux-cored ring even when an external force is applied.

### [Solution to Problem]

In order to achieve the object, one aspect of a flux-cored ring according to the present invention is a flux-cored ring of a tubular brazing material enclosing flux that is formed into a ring by abutting both end portions in an extending direction of the tubular brazing material against each other. The flux-cored ring includes: in one of the both end portions, a pair of protruded portions protruding toward the other of the both end portions and opposed to each other in a direction orthogonal to the extending direction of the tubular brazing material; and in the other of the both end portions, a pair of recessed portions fitting onto the protruded portions and opposed to each other in the direction orthogonal to the extending direction of the tubular brazing material.

### [Advantageous Effects of Invention]

It is possible to prevent sliding at the ring abutment of the flux-cored ring even when an external force is applied.

### [Brief Description of Drawings]

[FIG. 1]

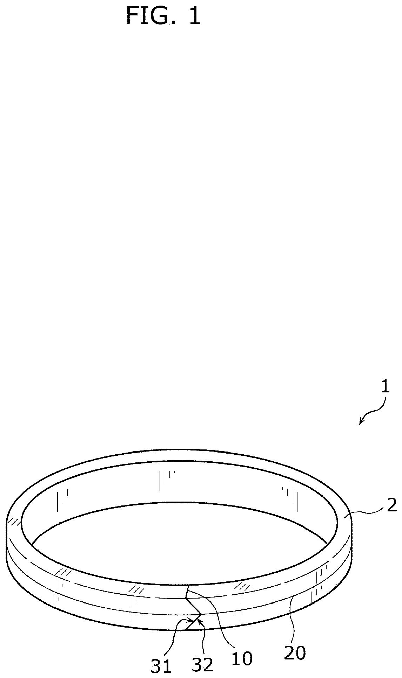

   FIG. 1 is a perspective view of a flux-cored ring according to an embodiment.
[FIG. 2]

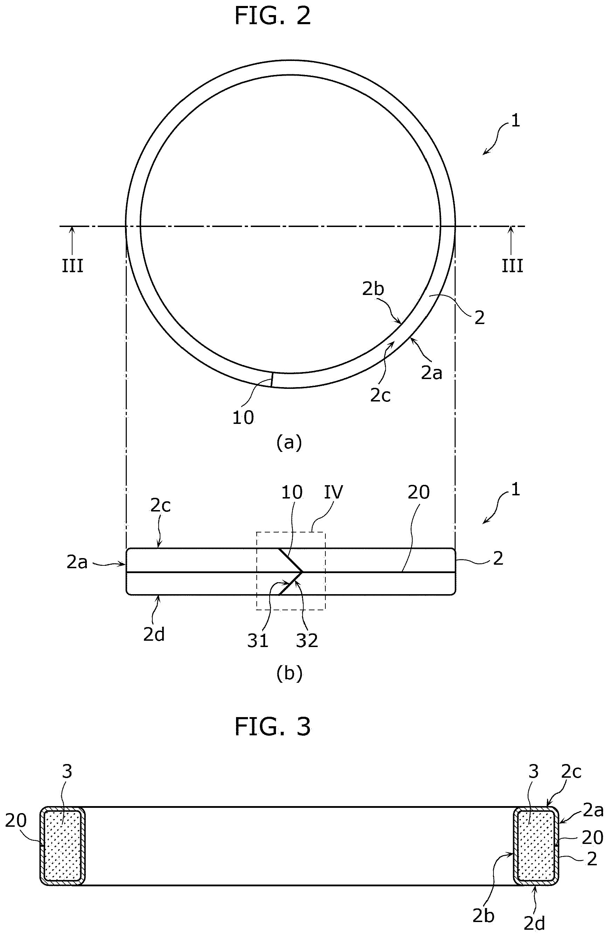

   FIG. 2 is a diagram illustrating a structure of the flux-cored ring according to the embodiment.
[FIG. 3]
   FIG. 3 is a sectional view of the flux-cored ring according to the embodiment taken along the line III-III in FIG. 2.
[FIG. 4]

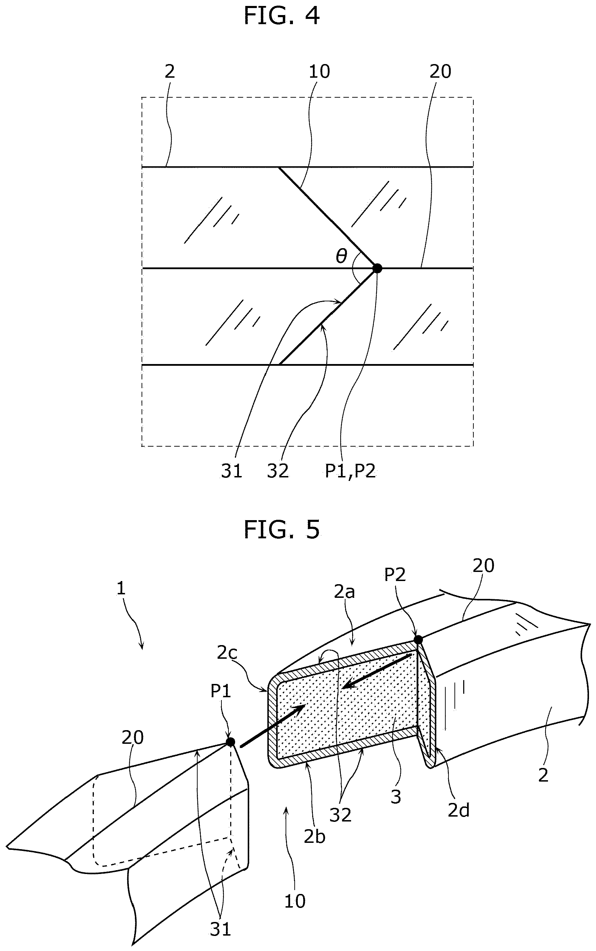

   FIG. 4 is an enlarged view of area IV surrounded by the dotted line in FIG. 2.
[FIG. 5]
   FIG. 5 is a diagram illustrating how to fit a pair of protruded portions into a pair of recessed portions at a ring abutment of the flux-cored ring according to the embodiment.
[FIG. 6]

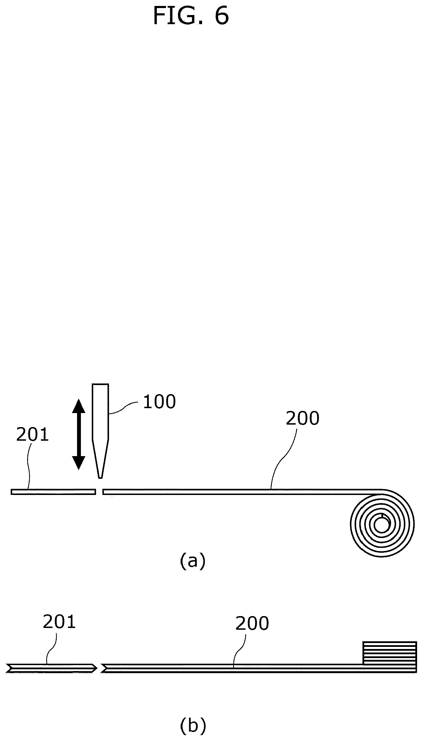

   FIG. 6 is a diagram for illustrating how to cut out a predetermined length of flux-cored wire from a flux-cored wire wound on a reel.
[FIG. 7]

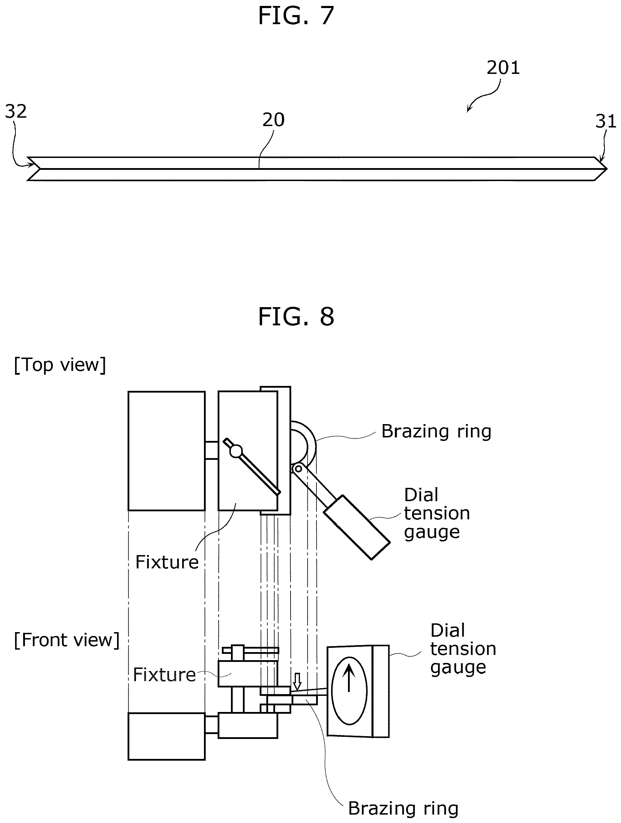

   FIG. 7 is an enlarged view of the cut out flux-cored wire.
[FIG. 8]
   FIG. 8 is a diagram for illustrating how to conduct the weight-bearing test for the flux-cored ring.
[FIG. 9]

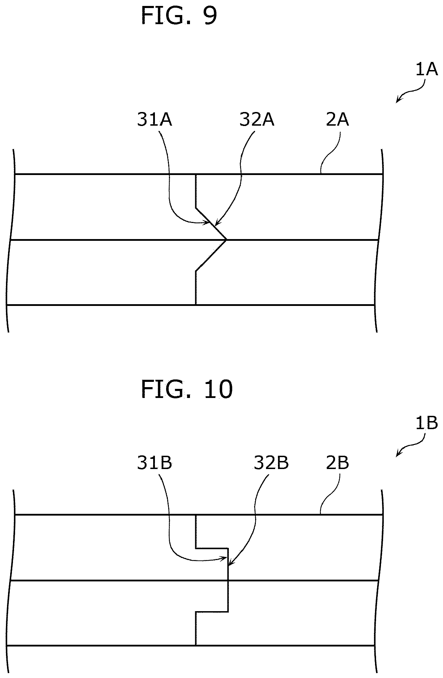

   FIG. 9 is an enlarged view of a ring abutment in a flux-cored ring according to variation 1 and its vicinity.
[FIG. 10]
   FIG. 10 is an enlarged view of a ring abutment in a flux-cored ring according to variation 2 and its vicinity.
[FIG. 11]

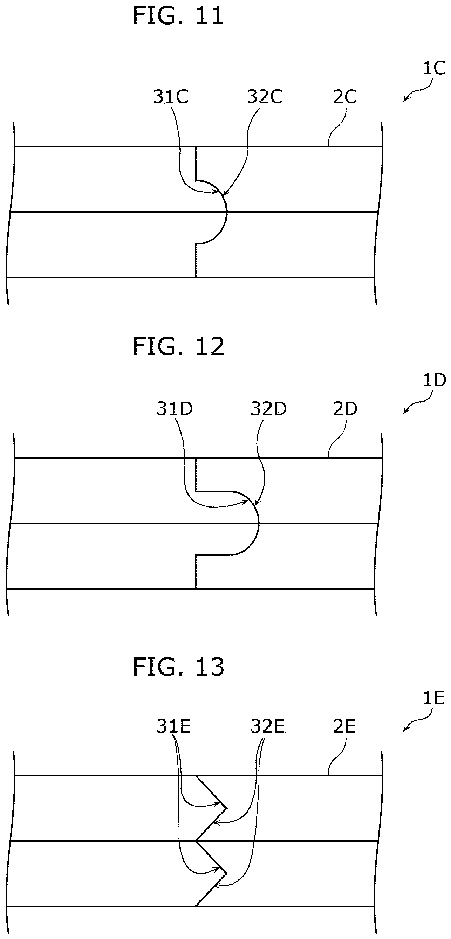

   FIG. 11 is an enlarged view of a ring abutment in a flux-cored ring according to variation 3 and its vicinity.
[FIG. 12]
   FIG. 12 is an enlarged view of a ring abutment in a flux-cored ring according to variation 4 and its vicinity.
[FIG. 13]
   FIG. 13 is an enlarged view of a ring abutment in a flux-cored ring according to variation 5 and its vicinity.
[FIG. 14]

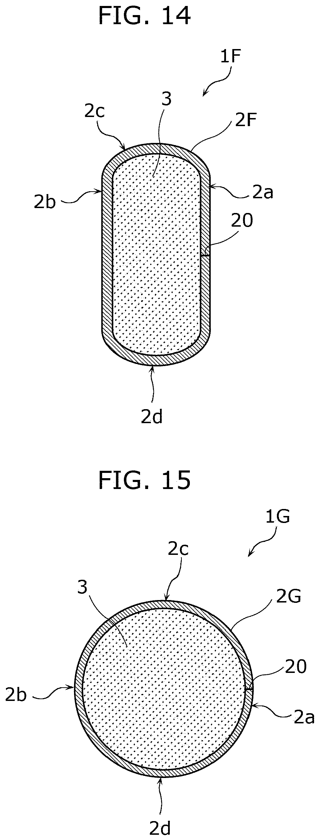

   FIG. 14 is a sectional view of a part of a flux-cored ring according to variation 6.
[FIG. 15]
   FIG. 15 is a sectional view of a part of a flux-cored ring according to variation 7.
[FIG. 16]
   FIG. 16 is a perspective view of a conventional flux-cored ring.
[FIG. 17]
   FIG. 17 is a perspective view of a conventional flux-cored ring in which sliding has occurred at the ring abutment.

### [Description of Embodiments]

Hereinafter, an embodiment according to the present invention is described with reference to the drawings. Note that the embodiment described here indicates one specific example of the present invention. Therefore, numerical values, shapes, materials, structural components, the arrangement and connection of the structural components, steps, the order of the steps, etc., indicated in the following embodiment are mere examples, and are not intended to limit the scope of the present invention. Furthermore, among the structural components in the following embodiment, components not recited in the independent claim which indicates the broadest concept of the present invention are described as arbitrary structural components.

In addition, each of the diagrams is a schematic diagram and thus is not necessarily strictly illustrated. In each of the diagrams, substantially the same structural components are assigned with the same reference signs, and redundant descriptions will be omitted or simplified. Note that, in the following embodiment, the term "approximately" or "substantially" not only means about but also includes a manufacturing error or a size tolerance.

### [Embod iment]

The structure of flux-cored ring 1 according to an embodiment is described with reference to FIG. 1 through FIG. 5. FIG. 1 is a perspective view of flux-cored ring 1 according to the embodiment. FIG. 2 is a diagram illustrating the structure of flux-cored ring 1. In FIG. 2, (a) is a top view of flux-cored ring 1 and (b) is a lateral view of flux-cored ring 1. FIG. 3 is a sectional view of flux-cored ring 1 taken along the line III-III in FIG. 2. FIG. 4 is an enlarged view of area IV surrounded by the dotted line in FIG. 2. FIG. 5 is a diagram illustrating how to fit a pair of protruded portions 31 into a pair of recessed portions 32 at ring abutment 10 of flux-cored ring 1.

As shown in FIG. 1 through FIG. 5, flux-cored ring 1 according to the present embodiment is a brazing ring having the shape of a ring as a whole, and includes: tubular brazing material 2 formed into a ring by abutting the both end portions in the extending direction of tubular brazing material 2 against each other; and flux 3 enclosed in tubular brazing material 2. In other words, flux-cored ring 1 is configured to form a ring by abutting the both end portions in the extending direction (the tubular axial direction) of tubular brazing material 2 enclosing flux 3 against each other.

More specifically, elongated brazing material 2 enclosing flux 3 is bent into an annular shape, thereby abutting one of the both end portions and the other of the both end portions against each other. Accordingly, flux-cored ring 1 has ring abutment 10 at which one of the both end portions of tubular brazing material 2 and the other of the both end portions abut against each other. At ring abutment 10, the face of one of the both end portions of tubular brazing material 2 and the face of the other of the both end portions are in contact with each other, thereby forming an abutment plane.

Tubular brazing material 2 is also formed by bending a plate having a predetermined width to abut the end portions in the width direction of the plate against each other. More specifically, tubular brazing material 2 is formed by widthwise bending an elongated rectangular flat plate to abut one of the both end portions in the width direction and the other of the both end portions against each other. Accordingly, flux-cored ring 1 has plate abutment 20 at which one of the end portions in the width direction of a plate constituting brazing material 2 and the other of the end portions abut against each other.

As shown in FIG. 1 through FIG. 3, plate abutment 20 is present along the whole circumference of flux-cored ring 1. In the present embodiment, plate abutment 20 is present on the outer circumferential-surface side of flux-cored ring 1. In other words, tubular brazing material 2 is formed into a ring so that plate abutment 20 is present on the outer circumferential-surface side of the ring.

As shown in (a) of FIG. 2, in the top view of flux-cored ring 1, ring-shaped brazing material 2 is annular-shaped. Brazing material 2 constitutes the outer shell (the outer skin) of flux-cored ring 1, and thus flux-cored ring 1 is also annular-shaped.

As shown in FIG. 3, the sectional view of brazing material 2 taken through a plane parallel to the height of brazing material 2 which is the vertical direction of FIG. 3 (i.e., a plane normal to the tubular axis of tubular brazing material 2 before brazing material 2 is shaped into a ring) is substantially the shape of a hollow rectangle. More specifically, in the sectional view, both the outer perimeter and the inner perimeter of brazing material 2 are in the shape of a rectangular with four rounded corners. Note that the thickness of the plate constituting brazing material 2 is constant throughout the entire plate, but the present invention is not limited to this. The thickness may be partially different. For example, in the sectional view taken through a plane normal to the tubular axis of brazing material 2, the plate constituting brazing material 2 may be thicker in a portion corresponding to each corner of the rectangular than in the other portions.

Brazing material 2 also has outer circumferential surface 2a, inner circumferential surface 2b, first side surface 2c, and second side surface 2d. Note that the exposed surface (outer surface) of brazing material 2 is the exposed surface (outer surface) of flux-cored ring 1, and thus outer circumferential surface 2a, inner circumferential surface 2b, first side surface 2c, and second side surface 2d of brazing material 2 constitute the outer circumferential surface, the inner circumferential surface, the first side surface, and the second side surface of flux-cored ring 1, respectively.

As shown in FIG. 3, in the substantially rectangular-shaped sectional view of brazing material 2, outer circumferential surface 2a, inner circumferential surface 2b, first side surface 2c, and second side surface 2d correspond to four sides of the rectangular. More specifically, in the substantially rectangular-shaped sectional view of brazing material 2, outer circumferential surface 2a and inner circumferential surface 2b correspond to a pair of long sides, and first side surface 2c and second side surface 2d correspond to a pair of short sides. In other words, in the substantially rectangular-shaped sectional view of brazing material 2, the length of brazing material 2 is longer in the ring thickness direction (height direction) than in the ring radial direction.

Brazing material 2 is used for brazing. As an example, brazing material 2 is used for aluminum brazing. In this case, brazing material 2 includes, for example, an aluminum-silicon alloy (Al-Si alloy), zinc (Zn), or a zinc-aluminum alloy (Al-Zn alloy). In the present embodiment, brazing material 2 is aluminum containing 12 wt.% silicon (Al-12wt.%Si).

The line width of tubular brazing material 2 is not particularly limited. As an example, the line width is at least 1 mm and at most 5 mm. In the present embodiment, the line width of tubular brazing material 2 is 1.8 mm. Note that, in the present embodiment, the sectional view of brazing material 2 is substantially rectangular-shaped, and thus the line width of tubular brazing material 2 is the width of outer circumferential surface 2a or inner circumferential surface 2b of brazing material 2. The line width of tubular brazing material 2 is also the line width of flux-cored ring 1. In other words, the line width of tubular brazing material 2 is the length of flux-cored ring 1 in the ring thickness direction (ring height).

The thickness of tubular brazing material 2 is also not particularly limited. As an example, the thickness is at least 0.9 mm and at most 3.0 mm. In the present embodiment, the thickness of tubular brazing material 2 is 0.9 mm. Note that, in the present embodiment, the sectional view of brazing material 2 is substantially rectangular-shaped, and thus the thickness of tubular brazing material 2 is the width of first side surface 2c or second side surface 2d of brazing material 2. The thickness of tubular brazing material 2 is also the thickness of flux-cored ring 1 in the ring radial direction.

As shown in FIG. 1 and FIG. 5, a pair of protruded portions 31 is formed in one of the both end portions in the extending direction (tubular axial direction) of tubular brazing material 2. A pair of recessed portions 32 is formed in the other of the both end portions in the extending direction (tubular axial direction) of tubular brazing material 2.

As shown in FIG. 2 and FIG. 5, each of protruded portions 31 is a protrusion that protrudes toward the other of the both end portions in the extending direction (circumferential direction) of tubular brazing material 2. Each of protruded portions 31 is formed to protrude toward the corresponding one of recessed portions 32.

In contrast, each of recessed portions 32 has a cutout such that the other of the both end portions of brazing material 2 is notched. More specifically, each of recessed portions 32 is formed so that the other of the both end portions is recessed backward in the extending direction (circumferential direction) of tubular brazing material 2.

As shown in FIG. 5, protruded portions 31 are opposed to each other in the direction orthogonal to the extending direction of tubular brazing material 2. In the present embodiment, protruded portions 31 are opposed in the ring radial direction of flux-cored ring 1 (direction from one of outer circumferential surface 2a and inner circumferential surface 2b to the other of outer circumferential surface 2a and inner circumferential surface 2b). In the same manner, recessed portions 32 are opposed to each other in the direction orthogonal to the extending direction of tubular brazing material 2. In the present embodiment, recessed portions 32 are opposed in the ring radial direction of flux-cored ring 1. Accordingly, one of protruded portions 31 and one of recessed portions 32 are formed on outer circumferential surface 2a of brazing material 2, and the other of protruded portions 31 and the other of recessed portions 32 are formed on inner circumferential surface 2b of brazing material 2.

As shown in FIG. 4, a pair of protruded portions 31 and a pair of recessed portions 32 abut against each other at ring abutment 10. In the present embodiment, the pair of protruded portions 31 fits into the pair of recessed portions 32. In other words, at ring abutment 10, the pair of protruded portions 31 and the pair of recessed portions 32 abut against each other by engaging without a gap. Accordingly, the shape of the protrusion of the pair of protruded portions 31 is the same as the shape of the cutout of the pair of recessed portions 32.

As described above, flux-cored ring 1 according to the present embodiment has the both end portions of brazing material 2 abutted against each other by fitting protruded portion 31 into recessed portion 32. With this, protruded portion 31 is not easily decoupled from recessed portion 32 even when an external force is applied to flux-cored ring 1. In particular, even when the external force is applied to flux-cored ring 1 in the ring thickness direction, protruded portion 31 is not easily decoupled from recessed portion 32 since protruded portion 31 is engaged with recessed portion 32 in the ring thickness direction of flux-cored ring 1. Accordingly, it is possible to prevent sliding caused by the external force from occurring at ring abutment 10 of flux-cored ring 1. In other words, it is possible to decrease an incidence of sliding at ring abutment 10 of flux-cored ring 1.

Note that, in the present embodiment, the shapes of protruded portions 31 are the same, but the shape of one of protruded portions 31 may be different from the shape of the other of protruded portions 31 as long as each of protruded portions 31 fits into the corresponding one of recessed portions 32. In other words, the shapes of recessed portions 32 are also the same, but the shape of one of recessed portions 32 may be different from the shape of the other of recessed portions 32 as long as each of recessed portions 32 fits onto the corresponding one of protruded portions 31.

In the present embodiment, when viewed from outer circumferential-surface 2a side of flux-cored ring 1, each of protruded portions 31 is in the shape of an inverted-V. In other words, in each of protruded portions 31, one of the end portions of brazing material 2 is triangularly protruded. When viewed from outer circumferential-surface 2a side of flux-cored ring 1, each of recessed portions 32 is in the shape of a V. In other words, in each of recessed portions 32, the other of the end portions of brazing material 2 is V-notched.

With this, protruded portion 31 is securely engaged with recessed portion 32 when inverted V-shaped protruded portion 31 is fitted into V-shaped recessed portion 32, thereby further preventing easy decoupling. Accordingly, it is possible to further prevent sliding at ring abutment 10.

As shown in FIG. 5, top point P1 of each of protruded portions 31 and bottom point P2 of each of recessed portions 32 are located on the center of the width of flux-cored ring 1. In the present embodiment, the center of the width of flux-cored ring 1 is coincide with plate abutment 20 in tubular brazing material 2 at which the end portions in the width direction of the plate abut against each other, and thus top point P1 of each of protruded portions 31 and bottom point P2 of each of recessed portions 32 are located on plate abutment 20.

With this, also for an external force from any direction on opposite sides of flux-cored ring 1 in the ring thickness direction, it is possible to equally prevent protruded portion 31 from being easily decoupled from recessed portion 32.

As shown in FIG. 4, when θ denotes the vertex angle at top point P1 (top angle) of each of protruded portions 31, angle θ may be at least 30° and at most 150°. Note that the vertex angle at top point P1 of each of protruded portions 31 is equal to the vertex angle at bottom point P2 (bottom angle) of each of recessed portions 32. In other words, the vertex angle at bottom point P2 of each of recessed portions 32 also may be at least 30° and at most 150°.

When angle θ exceeds 150°, the depth (recess amount) of the cutout of recessed portion 32 becomes shallow. Accordingly, protruded portion 31 is easily decoupled from recessed portion 32 when an external force is applied to flux-cored ring 1. In contrast, when angle θ is less than 30°, the depth of the cutout of recessed portion 32 is too deep, and thus outer circumferential-surface 2a side and inner circumferential-surface 2b side of recessed portions 32 (i.e., the remaining end portion excluding the cutout) are low in intensity. Accordingly, recessed portion 32 may be deformed when a strong external force is applied to flux-cored ring 1.

In the present embodiment, both the vertex angle θ at top point P1 of each of protruded portions 31 and the vertex angle θ at bottom point P2 of each of recessed portions 32 are substantially 90°. More specifically, the shape of the protrusion of each of protruded portions 31 is an isosceles right triangle. The shape of the cutout of each of recessed portions 32 is also an isosceles right triangle. In other words, the shape of a part where protruded portion 31 fits into recessed portion 32 in ring abutment 10 is an isosceles right triangle. With this, it is possible to prevent deforming and easy decoupling of protruded portion 31 and recessed portion 32 even when an external force is applied.

As shown in FIG. 3 and FIG. 5, tubular brazing material 2 is filled with flux 3. In the present embodiment, flux 3 is for aluminum brazing and is mixed flux containing potassium fluoroaluminate flux, cesium fluoroaluminate flux, or at least one of potassium fluoroaluminate flux or cesium fluoroaluminate flux.

Next, a method of manufacturing flux-cored ring 1 according to the present embodiment is described with reference to FIG. 6 and FIG. 7. FIG. 6 is a diagram for illustrating how to cut out a predetermined length of flux-cored wire 201 from flux-cored wire 200 wound on a reel. FIG. 7 is an enlarged view of flux-cored wire 201 cut out from flux-cored wire 200. Note that, in FIG. 6, (a) is a lateral view, and (b) is a top view.

As shown in FIG. 6, a predetermined length of flux-cored wire 201 can be cut out from flux-cored wire 200 by reeling out flux-cored wire 200 wound on a reel and cutting flux-cored wire 200 from the top with cutting blade 100. The longitudinal length of cut-out flux-cored wire 201 is the length in pattern development of flux-cored ring 1 shown in FIG. 1.

Note that flux-cored wire 200 wound on the reel can be made by supplying powdered flux on an elongated planar brazing material plate having a predetermined width, and simultaneously performing a bending process on the brazing material plate while conveying the brazing material plate to abut the end portions in the width direction of the brazing material plate against each other little by little.

Accordingly, as shown in FIG. 7, flux-cored wire 201 cut out from flux-cored wire 200 includes plate abutment 20 at which the end portions in the width direction of the brazing material plate abut against each other. Flux-cored wire 201 is also an elongated tubular brazing material filled with flux.

In the present embodiment, a pair of protruded portions 31 is formed in one of the end portions of flux-cored wire 201, and a pair of recessed portions 32 is formed in the other of the end portions of flux-cored wire 201. More specifically, each of protruded portions 31 is in the shape of an inverted-V, and each of recessed portions 32 is in the shape of a V. Accordingly, in order to perform V-shaped cutting on flux-cored wire 200, the shape of cutting blade 100 for cutting flux-cored wire 200 is a triangle. Note that, although not shown in the drawings, flux-cored wire 200 is supported by a wire guide when flux-cored wire 200 is cut with cutting blade 100. The wire guide has a triangular recessed receptor corresponding to triangle-shaped cutting blade 100.

Flux-cored wire 201 cut out from flux-cored wire 200 is shaped into a ring by abutting the both end portions against each other. Specifically, flux-cored wire 201 is shaped into a ring by abutting a pair of protruded portions 31 and a pair of recessed portions 32 against each other. More specifically, flux-cored wire 201 is shaped into a ring by performing an upper semicircle process (inversed-U process) using a mold and subsequently performing a lower semicircle process using a mold simultaneously with abutting the both end portions of flux-cored wire 201 against each other. In this manner, it is possible to achieve flux-cored ring 1 shown in FIG. 1.

Note that a ring forming machine can be used to perform the cutting of flux-cored wire 200 with cutting blade 100 and the shaping of cut out flux-cored wire 201 into a ring, for example.

As described above, the method of manufacturing flux-cored ring 1 according to the present embodiment includes: forming protruded portion 31 in one of the both end portions of flux-cored wire 201; forming recessed portion 32 which fits onto protruded portion 31 in the other of the both end portions; and when flux-cored wire 201 is shaped into a ring to manufacture flux-cored ring 1, fitting protruded portion 31 into recessed portion 32 to abut protruded portion 31 and recessed portion 32 against each other.

With this, it is possible to achieve flux-cored ring 1 that can prevent sliding at ring abutment 10 even when an external force is applied.

We conducted a drop experiment for verifying the effect of preventing sliding in flux-cored ring 1 according to the present embodiment. The following describes the results of the experiment.

In this experiment, as a working example of flux-cored ring 1 according to the present embodiment shown in FIG. 1, a brazing ring is prepared which is shaped into an annular ring having the ring inner diameter of 8.4 mm from brazing material 2 having, in the line size, a length in the ring thickness direction (vertical width) of 1.8 mm and a length in the ring radial direction (horizontal width) of 0.9 mm in the sectional view by abutting the both end portions against each other. Note that, at ring abutment 10, angle θ of each of protruded portions 31 and angle θ of each of recessed portions 32 are both 90°.

In addition, as a comparison example, another annular brazing ring is prepared in which the both end portions have a flat face as shown in FIG. 16 instead of forming protruded portion 31 and recessed portion 32 in the both end portions. Note that the brazing ring of the comparison example and the brazing ring of the working example are the same except for the shape of ring abutment 10. Accordingly, the ring inner diameter and the line size of the brazing ring of the comparison example are the same as the ring inner diameter and the line size of the brazing ring of the working example.

First, 1 kg (approximately 9000 pieces) of brazing rings of the working example are put in UNIPACK (manufactured by SEISANNIPPONSHA Ltd., size J, a plastic bag) and 1 kg (approximately 9000 pieces) of brazing rings of the comparison example are also put in UNIPACK, and the bags are dropped from a height of 80 cm. Then, the brazing rings are taken out from UNIPACK, and all the brazing rings of the working example and all the brazing rings of the comparison example are classified whether sliding has occurred or not at the ring abutment by passing through a slit adjusted to have a clearance ranging from 2.00 mm to 2.05 mm using a feeler gauge.

As the results, 27 brazing rings of the comparison example are eliminated by the slit. In other words, for the brazing ring of the comparison example, sliding has occurred in 27 brazing rings. In contrast, all the brazing rings of the working example have passed through the slit. In other words, for the brazing ring of the working example, sliding caused by an external force has not occurred at the ring abutment.

We also conducted a weight-bearing test for flux-cored ring 1 according to the embodiment. The following describes the results of the test with reference to FIG. 8. FIG. 8 is a diagram for illustrating how to conduct the weight-bearing test for the flux-cored ring.

In this test, for flux-cored ring 1 of the working example in which ring abutment 10 is V-shaped and flux-cored ring 1X of the comparison example in which ring abutment 10 is flat, the sliding resistance to an added weight is checked. Moreover, in this test, as flux-cored ring 1 of the working example and flux-cored ring 1X of the comparison example, 10 brazing rings identical to those used in the above drop experiment are used for each of the examples.

As shown in FIG. 8, using the vacuum base full-turn vise (manufactured by PanaVise Products, inc.) as a fixture, the brazing ring to be tested is fixed to the fixture so that ring abutment 10 is vised half with respect to a line passing through the center of the brazing ring from the vicinity of ring abutment 10, and the weight is added by pressing the non-vised end portion of the brazing ring with the end of the gauge head of the dial tension gauge (DITG-500PJ, manufactured by Niigata seiki Co.,Ltd.). More specifically, the maximum measurement of the dial tension gauge is 5N (0.51 kg), and thus weight is added at intervals of 0.1 N from 1N to 5N. In this manner, the added weight at a time when sliding has occurred at ring abutment 10 of the brazing ring was measured.

In this case, for the brazing ring of the comparison example in which ring abutment 10 is flat, deformation of ring abutment 10 increasing with increase in added weight leads to slipping of the gauge head of the dial tension gauge, and the weight addition is terminated. The added weight indicated by the dial tension gauge at this time is measured as the added weight at a time when sliding has occurred at ring abutment 10. As the result, the added-weight measurement values of the brazing rings of the comparison example are, among 10 brazing rings, 2.2 N for 4 brazing rings, 2.3 N for 2 brazing rings, and 2.4 N for 4 brazing rings, and the average of the 10 brazing rings is 2.3 N.

In contrast, for the brazing rings of the working example in which ring abutment 10 is V-shaped, almost no sliding has occurred at ring abutment 10 even when the added weight reaches 5N.

This test confirmed that the brazing ring of the working example is greater in the sliding resistance to the added weight than the brazing ring of the comparison example.

As described above, flux-cored ring 1 according to the present embodiment has: in one of the both end portions of brazing material 2, a pair of protruded portions 31 which protrude toward the other of the both end portions; and in the other of the both end portions of brazing material 2, a pair of recessed portions 32 which fit onto protruded portions 31 and are opposed to each other in the direction orthogonal to the extending direction of brazing material 2.

With this, protruded portion 31 is not easily decoupled from recessed portion 32 even when an external force is applied to flux-cored ring 1, and thus it is possible to prevent sliding from occurring at ring abutment 10 of flux-cored ring 1.

In particular, flux-cored ring 1 according to the present embodiment includes not one protruded portion 31 and one recessed portion 32 but two protruded portions 31 and two recessed portions 32 in the both end portions of brazing material 2. In addition, two protruded portions 31 are paired opposite each other in the direction orthogonal to the extending direction of brazing material 2, and two recessed portions 32 are also paired opposite each other in the direction orthogonal to the extending direction of brazing material 2.

With this, a pair of opposed protruded portions 31 are securely engaged with a pair of opposed recessed portions 32. When an external force is applied to flux-cored ring 1 from the direction orthogonal to the extending direction of brazing material 2, the pair of opposed protruded portions 31 can be balanced with the pair of opposed recessed portions 32 to equally absorb the external force. Accordingly, in comparison with a flux-cored ring in which only one protruded portion 31 fits into only one recessed portion 32, it is possible to effectively prevent sliding caused by the external force from occurring at ring abutment 10 of flux-cored ring 1.

In addition, protruded portion 31 and recessed portion 32 are designed to be paired opposite each other, and thus, as shown in FIG. 6, a pair of protruded portions 31 and a pair of recessed portions 32 are easily formed in flux-cored wire 201 when flux-cored wire 201 is cut out from flux-cored wire 200 with cutting blade 100. In other words, the pair of protruded portions 31 can be formed in cut out flux-cored wire 201 at once by a single cutting operation using cutting blade 100, and at the same time, the pair of recessed portions 32 also can be formed. Accordingly, brazing material 2 is designed to include a pair of opposed protruded portions 31 and a pair of opposed recessed portions 32, and thus flux-cored ring 1 according to the present embodiment can be achieved by simply changing the shape of cutting blade 100. In other words, flux-cored ring 1 according to the present embodiment can be manufactured using a manufacturing facility as it is, i.e., the existing ring forming machine for producing flux-cored rings from a flux-cored wire, and thus it is possible to achieve flux-cored ring 1 according to the present embodiment without additional manufacturing cost.

### (Variations)

Flux-cored ring 1 according to the present invention has been described with reference to a preferred embodiment, but the present invention is not limited to the foregoing embodiment.

For example, in flux-cored ring 1 according to the foregoing embodiment, protruded portion 31 and recessed portion 32 in brazing material 2 are formed throughout the line width of brazing material 2, but the present invention is not limited to this. More specifically, as seen from flux-cored ring 1A shown in FIG. 9, protruded portion 31A and recessed portion 32A in brazing material 2A may be formed in a part of the line width of brazing material 2A. In other words, when viewed from outer circumferential-surface 2a side of flux-cored ring 1A, the contact portion between protruded portion 31A and recessed portion 32A may include a straight-line portion orthogonal to the extending direction of brazing material 2A.

Moreover, in flux-cored ring 1 according to the foregoing embodiment, the shape of a portion of brazing material 2 where protruded portion 31 fits into recessed portion 32 is a triangle, but the present invention is not limited to this. For example, as seen from flux-cored ring 1B shown in FIG. 10, the shape of a portion of brazing material 2B where protruded portion 31B fits into recessed portion 32B may be a quadrangle. Note that the shape of the portion where protruded portion 31B fits into recessed portion 32B is not limited to a quadrangle such as a rectangular or a square. Any other polygon is possible instead of a quadrangle. However, in view of prevention of sliding at the ring abutment of brazing material 2B, a quadrangle whose longitudinal direction is the extending direction of brazing material 2B is better for the shape of the portion where protruded portion 31B fits into recessed portion 32B than a quadrangle whose longitudinal direction is the line width direction of brazing material 2B.

Alternatively, as seen from flux-cored ring 1C shown in FIG. 11, the shape of a portion of brazing material 2C where protruded portion 31C fits into recessed portion 32C may be a part of a circle such as a semicircle. Note that the shape of the portion where protruded portion 31C fits into recessed portion 32C may be a part of an ellipse such as a semi-ellipse, instead of a semicircle. However, in view of prevention of sliding at the ring abutment of brazing material 2C, a shape whose longitudinal direction is the extending direction of brazing material 2C is better for the shape of the portion where protruded portion 31C fits into recessed portion 32C than a shape whose longitudinal direction is the line width direction of brazing material 2C.

Alternatively, as seen from flux-cored ring 1D shown in FIG. 12, the shape of a portion of brazing material 2D where protruded portion 31D fits into recessed portion 32D may be a part of a race-track shape. However, in view of prevention of sliding at the ring abutment of brazing material 2D, as shown in FIG. 12, a shape whose longitudinal direction is the extending direction of brazing material 2D is better for the shape of the portion where protruded portion 31D fits into recessed portion 32D than a shape whose longitudinal direction is the line width direction of brazing material 2D.

Moreover, in flux-cored ring 1 according to the foregoing embodiment, the shape of a portion of brazing material 2 where protruded portion 31 fits into recessed portion 32 is a single triangle, but the present invention is not limited to this. For example, as seen from flux-cored ring 1E shown in FIG. 13, the shape of a portion of brazing material 2E where protruded portion 31E fits into recessed portion 32E may be a combination of two triangles. For example, in FIG. 13, the protrusions of protruded portions 31E are engaged with the cutouts of recessed portions 32E in a zig-zag manner. As described above, when the shape of the portion where protruded portion 31 fits into recessed portion 32 is a combination of multiple triangles, it is possible to further prevent sliding at the ring abutment of brazing material 2E. Note that instead of a combination of two triangles, three or more triangles may be combined, or multiple shapes other than a triangle may be combined. In this case, multiple different shapes may be combined.

Moreover, in flux-cored ring 1 according to the foregoing embodiment, the shape of a sectional view of brazing material 2 is substantially rectangular, but the present invention is not limited to this. For example, as seen from flux-cored ring 1F shown in FIG. 14, the shape of the sectional view of brazing material 2F may be a shape in which at least one of four sides of a rectangle is outwardly protruded like a race track. Note that, in FIG. 14, two sides of brazing material 2F, i.e., first side surface 2c and second side surface 2d, are outwardly protruded in the shape of an arc. Note that FIG. 14 shows not the whole but only a part (corresponding to one of the parts in FIG. 3) of the sectional view of flux-cored ring 1F.

Alternatively, as seen from flux-cored ring 1G shown in FIG. 15, the shape of the sectional view of brazing material 2G may be a circle. In other words, in the foregoing embodiment, flux-cored ring 1 is obtained by forming rectangular-wire brazing material 2 into a ring, but may by forming round-wire brazing material 2G into a ring. In this case, in the sectional view of brazing material 2G, outer circumferential surface 2a, inner circumferential surface 2b, first side surface 2c, and second side surface 2d are each an arc having the center angle of 90°. Note that FIG. 15 shows not the whole but only a part (corresponding to one of the parts in FIG. 3) of the sectional view of flux-cored ring 1G.

Moreover, in flux-cored ring 1 according to the foregoing embodiment, brazing material 2 is configured to have the length in the ring thickness direction longer than the length in the ring radial direction, but the present invention is not limited to this. More specifically, brazing material 2 may be configured to have the length in the ring thickness direction shorter than the length in the ring radial direction.

Moreover, in the foregoing embodiment, ring-shaped flux-cored ring 1 is annular-shaped in the top view, but the present invention is not limited to this. Any other hollow shape such as a hollow rectangle, a hollow race-track shape, or a hollow ellipse is possible.

Moreover, at ring abutment 10 of flux-cored ring 1 according to the foregoing embodiment, one of the end portions of brazing material 2 and the other of the end portions abut against each other without a gap between protruded portion 31 and recessed portion 32, but there may be a slight gap between protruded portion 31 and recessed portion 32.

Moreover, in the foregoing embodiment, top point P1 of each of protruded portions 31 and bottom point P2 of each of recessed portions 32 are located on plate abutment 20, but the present invention is not limited to this. For example, top point P1 of each of protruded portions 31 and bottom point P2 of each of recessed portions 32 need not be located on plate abutment 20. In other words, top point P1 and bottom point P2 may be displaced from the center of the width of flux-cored ring 1. Furthermore, top point P1 and bottom point P2 do not necessarily coincide with plate abutment 20.

Moreover, in flux-cored ring 1 according to the foregoing embodiment, brazing material 2 is formed into a ring so that plate abutment 20 is located on outer circumferential-surface 2a side of the ring, but the present invention is not limited to this. For example, brazing material 2 may be formed into a ring so that plate abutment 20 is located on inner circumferential-surface 2b side of the ring.

Moreover, flux-cored ring 1 according to the foregoing embodiment is of an abut type with plate abutment 20 formed by abutting the end portions in the width direction of the brazing material plate against each other, but the present invention is not limited to this. In other words, in the foregoing embodiment, the seam of flux-cored wire 200 is configured to abut the end portions in the width direction of the brazing material plate against each other, but the present invention is not limited to this. For example, the flux-cored ring may be of a wrapped type with a plate overlap formed by overlapping the end portions in the width direction of the brazing material plate with each other. In other words, the seam of the flux-cored wire may be configured to overlap the end portions in the width direction of the brazing material plate with each other.

The present invention includes, for example, embodiments that can be obtained by various modifications to the foregoing embodiment and variations that may be conceived by those skilled in the art, and embodiments obtained by combining structural components and functions in the embodiment and variations in any manner without departing from the essence of the present invention.

### [Industrial Applicability]

The present invention is useful as a flux-cored ring for use in brazing.

### [Reference Signs List]

1, 1A, 1B, 1C, 1D, 1E, 1F, 1G flux-cored ring
2, 2A, 2B, 2C, 2D, 2E, 2F, 2G brazing material
2a outer circumferential surface
2b inner circumferential surface
2c first side surface
2d second side surface
3 flux
10 ring abutment
20 plate abutment
31, 31A, 31B, 31C, 31D, 31E protruded portion
32, 32A, 32B, 32C, 32D, 32E recessed portion
100 cutting blade
200, 201 flux-cored wire

## Claims

1. A flux-cored ring of a tubular brazing material enclosing flux that is formed into a ring by abutting both end portions in an extending direction of the tubular brazing material against each other, the flux-cored ring comprising:
in one of the both end portions, a pair of protruded portions protruding toward the other of the both end portions and opposed to each other in a direction orthogonal to the extending direction of the tubular brazing material; and
in the other of the both end portions, a pair of recessed portions fitting onto the protruded portions and opposed to each other in the direction orthogonal to the extending direction of the tubular brazing material.

2. The flux-cored ring according to claim 1, wherein
one of the protruded portions and one of the recessed portions are formed on an outer circumferential surface of the flux-cored ring, and
the other of the protruded portions and the other of the recessed portions are formed on an inner circumferential surface of the flux-cored ring.

3. The flux-cored ring according to claim 2, wherein
when viewed from an outer circumferential-surface side of the flux-cored ring,
each of the protruded portions is in a shape of an inverted-V, and
each of the recessed portions is in a shape of a V.

4. The flux-cored ring according to claim 3, wherein
a top point of each of the protruded portions and a bottom point of each of the recessed portions are located on a center of a width of the flux-cored ring.

5. The flux-cored ring according to claim 3 or 4, wherein
a vertex angle at a top point of each of the protruded portions and a vertex angle at a bottom point of each of the recessed portions are at least 30° and at most 150°.

6. The flux-cored ring according to claim 3 or 4, wherein
a vertex angle at a top point of each of the protruded portions and a vertex angle at a bottom point of each of the recessed portions are substantially 90°.

7. The flux-cored ring according to any one of claims 1 to 6, wherein
the tubular brazing material is formed by bending a plate having a predetermined width to abut end portions in a width direction of the plate against each other, and
a top point of each of the protruded portions and a bottom point of each of the recessed portions are located on a plate abutment in the tubular brazing material at which the end portions in the width direction of the plate abut against each other.

8. The flux-cored ring according to any one of claims 1 to 7, wherein
a line width of the tubular brazing material is at least 1 mm and at most 5 mm.

9. The flux-cored ring according to any one of claims 1 to 8, wherein
a thickness of the tubular brazing material is at least 0.5 mm and at most 3.0 mm.

10. The flux-cored ring according to any one of claims 1 to 9, wherein
the tubular brazing material includes an aluminum-silicon alloy, zinc, or a zinc-aluminum alloy.

11. The flux-cored ring according to any one of claims 1 to 10, wherein
the flux is for aluminum brazing and is mixed flux containing potassium fluoroaluminate flux, cesium fluoroaluminate flux, or at least one of potassium fluoroaluminate flux or cesium fluoroaluminate flux.
